# EUROPÄISCHE PATENTSCHRIFT

(11) **EP 3 325 232 B1**
(45) Veröffentlichungstag und Bekanntmachung des Hinweises auf die Patenterteilung: **10.08.2022**
(21) Anmeldenummer: 16728924.8
(22) Anmeldetag: 08.06.2016
(51) Int. Cl.: B25J 17/02

(54) **AUSGLEICHSVORRICHTUNG FÜR EINE HANDHABUNGSEINRICHTUNG SOWIE HANDHABUNGSEINRICHTUNG MIT DER AUSGLEICHSVORRICHTUNG**
COMPENSATING DEVICE FOR A HANDLING UNIT AND HANDLING UNIT COMPRISING THE COMPENSATING DEVICE
SYSTÈME DE COMPENSATION POUR UN DISPOSITIF DE MANIPULATION, AINSI QUE DISPOSITIF DE MANIPULATION MUNI DUDIT SYSTÈME DE COMPENSATION

(30) Priorität: 24.07.2015 DE 102015214003
(43) Veröffentlichungstag der Anmeldung: 30.05.2018
(73) Patentinhaber: Robert Bosch GmbH, 70442 Stuttgart (DE)
(72) Erfinder: RUEB, Andreas, 71254 Ditzingen (DE)
(86) Internationale Anmeldenummer: PCT/EP2016/062969
(87) Internationale Veröffentlichungsnummer: WO 2017/016727

(56) Entgegenhaltungen:
- DE-A1- 3 004 014
- DE-A1- 3 640 973
- DE-A1- 3 641 368

## Beschreibung

### Stand der Technik

Die Erfindung betrifft eine Ausgleichsvorrichtung für eine Handhabungseinrichtung, wobei die Ausgleichsvorrichtung einen ersten Schnittstellenabschnitt für einen Manipulator und einen zweiten Schnittstellenabschnitt für einen Endeffektor aufweist, so dass die Ausgleichsvorrichtung zwischen dem Manipulator und dem Endeffektor anordenbar ist, mit mindestens einer Gelenkeinrichtung, wobei die mindestens eine Gelenkeinrichtung gleichgerichtet zu einer ersten Achse zwischen den Schnittstellenabschnitten ausgerichtet ist und einen ersten und zweiten Gelenkpartner aufweist, wobei der erste Gelenkpartner mit dem ersten Schnittstellenabschnitt und der zweite Gelenkpartner mit dem zweiten Schnittstellenabschnitt verbunden ist, und wobei der eine Gelenkpartner einen Kugelabschnitt und der andere Gelenkpartner einen Aufnahmeabschnitt für den Kugelabschnitt aufweist, so dass die Gelenkeinrichtung ein Schwenkgelenk oder ein Kugelgelenk bildet. Die Erfindung betrifft ferner eine Handhabungseinrichtung mit der Ausgleichsvorrichtung.

In der Automatisierungstechnik werden Roboter vielfach eingesetzt, um z.B. Werkstücke zu greifen und zu positionieren. Die Roboter haben eine sehr hohe Positioniergenauigkeit, allerdings können bei Abgriff- und Fügeaufgaben Störungen aufgrund von einer unbekannten oder ungenauen Positionierung des Werkstücks auftreten. Um derartige Positionstoleranzen kompensieren zu können, sind Ausgleichseinrichtungen bekannt geworden, welche zwischen dem Roboter und einen von dem Roboter bewegten Greifer gesetzt werden können. Derartige Ausgleichseinrichtungen erlauben eine Relativverschiebung zwischen dem Greifer und dem Roboter, wobei die Positionstoleranzen durch die Relativverschiebung kompensiert werden. Im Ergebnis werden durch derartige Ausgleichseinrichtungen die Toleranzanforderungen an die Position des Werkstücks vereinfacht.

Die Druckschrift DE 296 245 A5 zeigt eine Montageausgleichseinrichtung, welche zwischen einem Roboter und einem Manipulator angeordnet ist. Die Montageausgleichseinrichtung setzt ein sequenzielles Konstruktionsprinzip um, wobei über mehrere Lagerstellen unterschiedliche Freiheitsgrade ermöglicht werden, um einen Toleranzausgleich zu erreichen. Unter anderem weist die Montageausgleichseinrichtung ein Kugelgelenk auf, welches eine Toleranzeinstellung in Bezug auf eine Schwenkung des Greifers relativ zu einer X-Achse und Y-Achse des Roboters ermöglicht. Ferner ist eine Höhenverstellung in Z-Richtung, eine Schwenkung um die Z-Richtung sowie eine lineare Verschiebung in der X-Y-Ebene über weitere Lagerstellen möglich.

In der Druckschrift DE 30 04 014 A1 ist eine Überlastsicherungsvorrichtung für ein Handhabungsgerät mit einem an einem Träger bewegbaren Arm, an dem ein Werkzeug angeordnet ist offenbart,wobei zwischen dem Träger und dem Arm eine in dem Antriebskreis befindliche Sicherungsschaltung vorgesehen ist und an einem der Teile eine Aufnahme und am anderen Teil eine zur Aufnahme bewegliches Element angeordnet ist.

Die Offenlegungsschrift DE 36 41 368 A1, die den nächstkommenden Stand der Technik bildet, beschreibt eine Lagerung für einen Greifer oder dergleichen. Am unteren Ende eines Arbeitsarms eines Industrieroboters ist eine Platte mit einer Ring-Platte befestigt, auf der eine Aufnahmescheibe mit einem Ansatzring für einen Greifer abgestützt ist. Die Platte und die Ringplatte haben je vier Rastvertiefungen für kugelförmige Rastelemente. Die Rastvertiefungen sind kegelförmig mit einem Öffnungswinkel von ca. 120 Grad. Die Platte hat zwei Zentrierbohrungen für Bewegungsbegrenzungsstifte, die in Bewegungsbegrenzungsbohrungen der Aufnahmescheibe hineinragen.

### Offenbarung der Erfindung

Im Rahmen der Erfindung wird eine Ausgleichsvorrichtung mit den Merkmalen des Anspruchs 1 sowie eine Handhabungseinrichtung mit den Merkmalen des Anspruchs 8 vorgeschlagen. Bevorzugte oder vorteilhafte Ausführungsformen der Erfindung ergeben sich aus den Unteransprüchen, der nachfolgenden Beschreibung sowie den beigefügten Figuren.

Die erfindungsgemäße Ausgleichsvorrichtung ist für eine Handhabungseinrichtung geeignet und/oder ausgebildet. Die Handhabungseinrichtung umfasst einen Manipulator, wie zum Beispiel einen Roboter, insbesondere einen Knickarmroboter, einen kartesischer Roboter, einen Pick-and-Place-Roboter, etc., sowie einen Endeffektor, wie zum Beispiel einen Greifer. In einem eingebauten Zustand ist die Ausgleichsvorrichtung zwischen dem Manipulator und dem Endeffektor insbesondere sequenziell angeordnet. Im speziellen wird der Endeffektor über die Ausgleichsvorrichtung von dem Manipulator getragen.

Die Ausgleichsvorrichtung weist einen ersten Schnittstellenabschnitt zur Anbindung an den Manipulator sowie einen zweiten Schnittstellenabschnitt zur Anbindung an den Endeffektor auf. Beispielsweise kann der erste Schnittstellenabschnitt über eine Schnellkupplung oder über eine Schraubverbindung an den Manipulator und der zweite Schnittstellenabschnitt über eine Schnellkupplung oder eine Schraubverbindung mit dem Endeffektor verbunden sein. Die Schnittstellenabschnitte können jeweils auch als eine Baugruppe ausgebildet sein.

Die Ausgleichsvorrichtung ermöglicht eine Relativbewegung zwischen dem ersten Schnittstellenabschnitt und dem zweiten Schnittstellenabschnitt in mehreren Bewegungsfreiheitsgraden. Somit kann der Endeffektor relativ zu dem Manipulator in den mehreren Bewegungsfreiheitsgraden bewegt werden, um Toleranzen z.B. bei Abgreif-, Positionier- und/oder Fügeaufgaben zu kompensieren. Die Bewegungsfreiheitsgrade können als Translationsfreiheitsgrade und/oder als Rotationsfreiheitsgrade ausgebildet sein.

Funktional betrachtet ist die Handhabungseinrichtung durch die Ausgleichsvorrichtung in der Lage, ein fehlpositioniertes Werkstück oder Werkzeug mit dem Endeffektor zu greifen, indem der Endeffektor relativ zu dem Manipulator in der Lage durch die Ausgleichsvorrichtung geändert wird.

Vorzugsweise sind die Schnittstellenabschnitte in Richtung einer ersten Achse sequenziell oder hintereinander aufgereiht. Besonders bevorzugt ist die erste Achse als eine Z-Achse und/oder Höhenachse des Manipulators ausgebildet.

Die Ausgleichsvorrichtung umfasst mindestens eine Gelenkeinrichtung. In der kleinsten Ausführungsform kann die Ausgleichsvorrichtung genau eine Gelenkeinrichtung aufweisen. Die mindestens eine Gelenkeinrichtung ist gleichgerichtet oder parallel zu der ersten Achse ausgerichtet.

Die Gelenkeinrichtung weist einen ersten und einen zweiten Gelenkpartner auf. Der erste Gelenkpartner ist mit dem ersten Schnittstellenabschnitt, der zweite Gelenkpartner ist mit dem zweiten Schnittstellenabschnitt verbunden. Insbesondere kann der erste Schnittstellenabschnitt relativ zu dem zweiten Schnittstellenabschnitt über die mindestens eine Gelenkeinrichtung in der Position verändert werden. Die Schnittstellenabschnitte bilden somit Koppeln, welche den Manipulator und den Endeffektor mit der mindestens einen Gelenkeinrichtung verbinden.

Der eine Gelenkpartner weist einen Kugelabschnitt auf, der andere Gelenkpartner weist einen Aufnahmeabschnitt für den Kugelabschnitt auf. Der Kugelabschnitt ist besonders bevorzugt sphärisch ausgebildet. Bei abgewandelten Ausführungsformen kann der Kugelabschnitt auch als eine konvexe Freiform realisiert sein. Der Aufnahmeabschnitt ist funktional so ausgebildet, dass die Gelenkeinrichtung ein Schwenkgelenk oder Kugelgelenk bildet. Bevorzugte Ausgestaltungen des Aufnahmeabschnitts werden später beschrieben. Das Schwenkgelenk erlaubt eine Schwenkung des ersten Schnittstellenabschnitts relativ zu dem zweiten Schnittstellenabschnitt um mindestens eine Schwenkachse, wobei die Schwenkachse quer, insbesondere senkrecht, zu der ersten Achse verläuft. Besonders bevorzugt ermöglicht die Gelenkeinrichtung eine Schwenkung um zwei derartige Schwenkachsen, welche zueinander senkrecht angeordnet sind. Wird die erste Achse als Z-Achse bezeichnet, so ermöglicht das Kugelgelenk eine Schwenkung um mindestens eine, vorzugsweise zwei unabhängige Schwenkachsen in der X-Y-Ebene.

Im Rahmen der Erfindung wird vorgeschlagen, dass der Aufnahmeabschnitt mindestens einen Rampenbereich aufweist, wobei der Kugelabschnitt von einer Normallage in einer Querrichtung zu der ersten Achse in eine Ausgleichslage verschiebbar ist, sodass die Gelenkeinrichtung ein Verschiebegelenk bildet.

Im Rahmen der Erfindung werden somit zwei Funktionen in die Gelenkeinrichtung zusammengezogen, wobei sowohl eine Schwenkbewegung als auch eine lineare Verschiebebewegung durch die gleiche Gelenkeinrichtung ermöglicht wird. Durch die Integration der beiden Funktionen in eine einzige Gelenkeinrichtung kann die Ausgleichsvorrichtung vereinfacht und/oder kompakter und insbesondere mit weniger sequenziell hintereinander angeordneten Lagerstellen im Vergleich zum Stand der Technik ausgeführt werden. Somit stellt die Zusammenführung der beiden Funktionen ein neues Konzept für eine derartige Ausgleichsvorrichtung dar.

Bei einer bevorzugten Ausgestaltung der Erfindung ist der Rampenbereich als ein um eine Mittelachse vollständig oder zumindest teilweise umlaufender Konusabschnitt ausgebildet. Die Mittelachse ist besonders bevorzugt gleich oder parallel zu der ersten Achse ausgerichtet. Für den Fall, dass der Rampenbereich als ein vollständig umlaufender Konusabschnitt realisiert ist, kann eine Verschiebebewegung des Kugelabschnitts relativ zu dem Aufnahmeabschnitt in jede Richtung senkrecht zu der Mittelachse erfolgen, indem der Kugelabschnitt den Konusabschnitt in radialer Richtung zu der Mittelachse als Querrichtung entlang läuft. Es ist jedoch auch möglich, bestimmte Richtungen zu sperren, indem der Konusabschnitt nur teilweise umlaufend ausgebildet ist. Beispielsweise kann sich der Konusabschnitt nur über 180 Grad um die Mittelachse erstrecken, wobei der Kugelabschnitt nur entlang des Konusabschnitts in der Querrichtung verschiebbar ist. In einer bevorzugten Ausgestaltung ist der Konusabschnitt als ein Kegelabschnitt, insbesondere als ein gerader Kegelabschnitt ausgebildet.

Es ist auch möglich, dass der Aufnahmeabschnitt so ausgebildet ist, dass eine Schwenkbewegung nicht um zwei zueinander senkrecht angeordnete Schwenkachsen möglich ist, sondern dass diese Schwenkbewegung in bestimmte Schwenkrichtungen durch die Gestaltung des Aufnahmeabschnitts gesperrt ist.

Erfindungsgemäß weist die Ausgleichsvorrichtung eine Vorspanneinrichtung zur Vorspannung der Gelenkeinrichtung auf. Die Vorspanneinrichtung und/oder die Vorspannung ist dabei so ausgeführt, dass der Kugelabschnitt von der Ausgleichslage in die Normallage zurückgeführt wird. Die Vorspanneinrichtung kann einteilig oder mehrteilig ausgebildet sein.

Bei einer bevorzugten Realisierung der Vorspanneinrichtung ist diese so ausgebildet, dass die Gelenkpartner in der Richtung der ersten Achse zueinander unter Vorspannung gesetzt werden. Dabei kann vorgesehen sein, dass genau einer der Gelenkpartner oder beide Gelenkpartner in der Richtung der ersten Achse vorgespannt sind. Der Rampenabschnitt ist vorzugsweise derart geformt, dass der Übergang des Kugelabschnitts von der Normallage in die Ausgleichslage gegen die Vorspannung oder gegen die Vorspannkraft erfolgt. Insbesondere ist der Rampenabschnitt derart geformt, dass der Übergang des Kugelabschnitts von der Normallage in die Ausgleichslage zu einer Vergrößerung der Gesamtlänge der Gelenkeinrichtung in Richtung der ersten Achse führt. Durch diese Ausgestaltung wird erreicht, dass die Gelenkeinrichtung und damit die Ausgleichsvorrichtung nach dem Ausweichen in eine Ausgleichslage für einen Toleranzausgleich selbsttätig in die Normallage zurückgeführt wird.

In einer ersten, sehr einfachen Ausführungsform kann die Vorspanneinrichtung oder ein Teil der Vorspanneinrichtung beispielsweise als eine Druckfeder ausgebildet sein, welche einen der Gelenkpartner in Richtung des anderen Gelenkpartners und zugleich in Richtung der ersten Achse mit einer Druckkraft als Vorspannkraft belastet, sodass dieser Gelenkpartner auf den anderen Gelenkpartner aufgedrückt wird.

Die derart gestaltete Ausgleichsvorrichtung kann, wie bereits erläutert, Lagetoleranzen, welche über den Endeffektor eingeleitet werden, kompensieren. In manchen Betriebssituationen ist es jedoch vorteilhaft, dass eine derartige Toleranzausgleichsfunktion deaktiviert wird. Insbesondere ist es in manchen Betriebssituationen vorteilhaft, wenn die Ausgleichsvorrichtung in Bezug auf nur einen, nur einige oder alle Bewegungsfreiheitsgrade starr gesetzt wird. Unter Berücksichtigung dieser Betriebssituationen weist die Ausgleichsvorrichtung erfindungsgemäß mindestens eine Riegeleinrichtung zur Verriegelung sämtlicher Bewegungsfreiheitsgrade zwischen dem ersten und dem zweiten Schnittstellenabschnitt auf.

Die Riegeleinrichtung kann beispielsweise manuell betätigt werden. Es ist jedoch bevorzugt, dass die Riegeleinrichtung gesteuert betätigt werden kann, sodass diese beispielsweise durch ein Steuersignal aktiviert und deaktiviert werden kann.

Im Sinne der Erfindung ist vorgesehen, dass die Riegeleinrichtung die Vorspanneinrichtung verriegelt. Durch die Verriegelung der Vorspanneinrichtung wird mindestens erreicht, dass eine Vergrößerung der Gesamtlänge der Gelenkeinrichtung verhindert wird, sodass als Folge die Gelenkeinrichtung als Verschiebegelenk blockiert ist. Für den Fall, dass mehrere Gelenkeinrichtungen verwendet werden und die Vorspanneinrichtung für alle der Riegeleinrichtungen blockiert wird, werden zudem die Gelenkeinrichtungen als Kugelgelenke ebenfalls starr gesetzt. Die Riegeleinrichtung ermöglicht somit eine einfache Umsetzung einer Starrschaltung der Ausgleichsvorrichtung.

Bei einer bevorzugten konstruktiven Ausgestaltung der Erfindung weist die Ausgleichsvorrichtung mindestens oder genau drei der Gelenkeinrichtungen auf. Besonders bevorzugt sind die mindestens drei Gelenkeinrichtungen auf einem gemeinsamen Teilkreis angeordnet. Der Teilkreis befindet sich insbesondere in einer Radialebene zu der ersten Achse. Dadurch, dass jede der mindestens oder genau drei Gelenkeinrichtungen als ein Kugel-Verschiebegelenk ausgebildet ist, ergeben sich drei translatorische und drei rotatorische Bewegungsfreiheitsgrade. Damit kann die Ausgleichsvorrichtung in jede Raumrichtung einen Toleranzausgleich durchführen.

Bei einer bevorzugten Realisierung der Erfindung ist vorgesehen, dass der erste Gelenkpartner mit dem ersten Schnittstellenabschnitt über die Vorspanneinrichtung in Richtung des zweiten Gelenkpartners verschiebbar vorgespannt ist und der zweite Gelenkpartner fest mit dem zweiten Schnittstellenabschnitt verbunden ist.

Damit sich erster und zweiter Gelenkpartner nicht trennen können ist es bevorzugt, dass sich der zweite Gelenkpartner in der Normallage an einem Stützbereich des ersten Schnittstellenabschnitts in Richtung der ersten Achse abstützt. Bei einer Nutzung der Gelenkeinrichtung als Verschiebegelenk wird der zweite Gelenkpartner in der Querrichtung entlang des Stützbereichs verschoben. Bei einer Nutzung als Kugelgelenk wird der zweite Gelenkpartner relativ zu dem Stützbereich verkippt.

Bei einer bevorzugten konstruktiven Realisierung der Erfindung umfasst die mindestens eine Riegeleinrichtung einen Riegelring, welcher in einer Umlaufrichtung Riegelabschnitte und Freiabschnitte aufweist. Insbesondere sind die Riegelabschnitte in Richtung der ersten Achse dicker als die Freiabschnitte ausgebildet. Der Riegelring ist vorzugsweise koaxial zu dem Teilkreis positioniert und verdrehbar und/oder verschwenkbar angeordnet. Der Riegelring ist durch eine Schwenkung zwischen einer Verriegelungsposition und einer Freigabeposition umschaltbar. In der Verriegelungsposition verriegeln die Riegelabschnitte die Gelenkeinrichtungen und/oder die Vorspanneinrichtung. Insbesondere sind die Riegelabschnitte in der Verriegelungsposition in der Richtung der ersten Achse deckungsgleich zu den Gelenkeinrichtungen angeordnet. In der Freigabeposition geben die Freiabschnitte des Riegelrings die Gelenkeinrichtungen beziehungsweise die Vorspanneinrichtung frei. Insbesondere sind die Freiabschnitte in der Freigabeposition deckungsgleich zu den Gelenkeinrichtungen angeordnet. Für den Fall, dass die Ausgleichsvorrichtung genau drei Gelenkeinrichtungen aufweist, zeigt die Ausgleichsvorrichtung drei Riegelabschnitte auf dem Riegelring, welche - genauso wie die Gelenkeinrichtungen - zueinander um 120 Grad versetzt angeordnet sind. Zwischen den Riegelabschnitten sind ebenfalls mit einem 120-Grad-Versatz die Freiabschnitte positioniert, sodass durch eine Verschwenkung oder Verdrehung des Riegelrings die Riegeleinrichtung umschaltbar ist.

Bei einer bevorzugten Weiterbildung der Erfindung weist die Riegeleinrichtung einen Motor zur Schwenkung des Riegelrings auf. Beispielsweise kann der Riegelring eine radial nach innen gerichtete Verzahnung aufweisen, in die ein Zahnrad, welches getriebetechnisch mit dem Motor verbunden ist, eingreift, sodass die Schwenkbewegung in den Riegelring eingeleitet werden kann.

Bei möglichen Weiterbildungen der Erfindung weist die Riegeleinrichtung weitere oder andere Riegel auf, wobei die Riegel in der Verriegelungsposition mindestens einen Bewegungsfreiheitsgrad der Ausgleichsvorrichtung verriegeln.

Ein weiterer Gegenstand der Erfindung bildet eine Handhabungseinrichtung mit einem Manipulator und einem Endeffektor, wobei zwischen dem Manipulator und dem Endeffektor die Ausgleichsvorrichtung wie diese zuvor beschrieben wurde beziehungsweise nach einem der vorhergehenden Ansprüche angeordnet ist. Weitere Merkmale, Vorteile und Wirkungen der Erfindung ergeben sich aus der nachfolgenden Beschreibung bevorzugter Ausführungsbeispiele der Erfindung sowie der beigefügten Figuren. Dabei zeigen:
Figur 1 eine schematische Darstellung einer Handhabungseinrichtung mit einer Ausgleichsvorrichtung;
Figur 2 eine stark schematisierte Darstellung der Ausgleichsvorrichtung in der Figur 1;
Figuren 3a, b, c drei verschiedene Ausführungsformen einer Gelenkeinrichtung in der Ausgleichsvorrichtung der vorhergehenden Figuren;
Figuren 4a - f sechs verschiedene Varianten für eine Riegeleinrichtung in der Ausgleichsvorrichtung und/oder bei den Gelenkeinrichtungen der vorhergehenden Figuren;
Figuren 5a, b zwei magnetische Ausführungsformen von Riegeleinrichtungen in gleicher Darstellung wie bei den vorhergehenden Figuren;
Figur 6 ein zweites Ausführungsbeispiel einer Ausgleichsvorrichtung in einer schematischen Schnittdarstellung parallel zu einer Z-Achse der Ausgleichsvorrichtung;
Figur 7 eine schematische Schnittdarstellung der Ausgleichsvorrichtung in der Figur 6 in einer Schnittebene senkrecht zu der Z-Achse;
Figur 8 die Ausgleichsvorrichtung in den Figuren 6 und 7 in gleicher Darstellung wie in der Figur 6 in einem Verriegelungszustand;
Figur 9 die Ausgleichsvorrichtung der vorhergehenden Figuren in der gleichen Schnittansicht bei einer Auslenkung in einer X-Richtung;
Figur 10 die Ausgleichsvorrichtung in der gleichen Schnittdarstellung wie in den vorhergehenden Figuren bei einer Auslenkung in Y-Richtung;
Figur 11 die Ausgleichsvorrichtung der vorhergehenden Figuren bei einer Auslenkung in Z-Richtung.

Einander entsprechende Teile und Größen sind in den jeweiligen Figuren mit einander entsprechenden Bezugszeichen dargestellt.

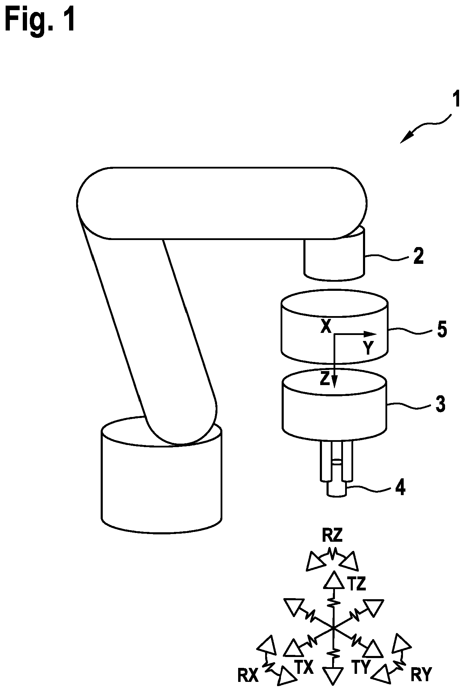

Die Figur 1 zeigt in einer schematischen Darstellung eine Handhabungseinrichtung 1, wie diese in der Automatisierung zur Aufnahme, Ablage und/oder Positionierung von Werkstücken oder Werkzeugen eingesetzt wird. Die Handhabungseinrichtung 1 umfasst einen Manipulator 2, welcher in diesem Beispiel als ein Knickarmroboter ausgebildet ist, prinzipiell kann der Manipulator 2 eine beliebige Roboterform aufweisen. Die Handhabungseinrichtung 1 weist einen Endeffektor 3 auf, wobei der Endeffektor 3 in diesem Beispiel als ein Greifer ausgebildet ist, welcher ein Werkstück 4 hält.

Zwischen dem Manipulator 2 und dem Endeffektor 3 ist eine Ausgleichsvorrichtung 5 angeordnet, welche sequenziell oder seriell zwischen dem Endeffektor 3 und dem Manipulator 2 positioniert ist.

Betrachtet man ein Werkzeugkoordinatensystem 6, welches in der Ausgleichsvorrichtung 5 angeordnet ist, so ist die Ausgleichsvorrichtung 5 in einer Z-Richtung zwischen dem Manipulator 2 und dem Endeffektor 3 angeordnet. Senkrecht zu der Z-Achse verlaufen eine X-Achse und rechtwinklig dazu eine Y-Achse.

Die Ausgleichsvorrichtung 5 erlaubt es, dass sich der Endeffektor 3 relativ zu dem Manipulator 2 in unterschiedlichen - in Abhängigkeit des Anwendungsfalls zu konfigurierenden - Bewegungsfreiheitsgraden bewegen kann. Wie aus der darunter stehenden Symbolik ableitbar, ist es in der allgemeinsten Ausprägung des Ausführungsbeispiels möglich, dass sich dieses in einer translatorischen Bewegung TX, TY und TZ entlang der X-Achse, Y-Achse bzw. Z-Achse sowie in rotatorischen Bewegungsfreiheitsgraden RZ, RY und RX um die X-Achse, Y-Achse bzw. Z-Achse bewegen kann.

Der zugrunde liegende Gedanke der Ausgleichsvorrichtung 5 ist es, dass bei einem Greifen oder Positionieren des Werkstücks 4 durch die Handhabungseinrichtung 1 Positionstoleranzen zwischen einer Soll-Lage und einer Ist-Lage des Werkstücks 4 beim Greifen beziehungsweise einer Ablage für das Werkstück 4 beim Ablegen auftreten können. Treten derartige Toleranzen auf, so ist es der Handhabungseinrichtung 1 nicht mehr möglich, das Werkstück 4 zu greifen oder abzulegen, stattdessen kommt es zu einer Kollision. Die Ausgleichsvorrichtung 5 erlaubt nun eine Relativbewegung zwischen dem Endeffektor 3 und dem Manipulator 2, sodass sich der Endeffektor 3 im Rahmen dieser Relativbewegung, insbesondere Relativverschiebung und/oder Relativdrehung, selbsttätig auf die Position des Werkstücks 4 beim Greifen beziehungsweise einer Ablageposition beim Ablegen einstellen, insbesondere einjustieren kann.

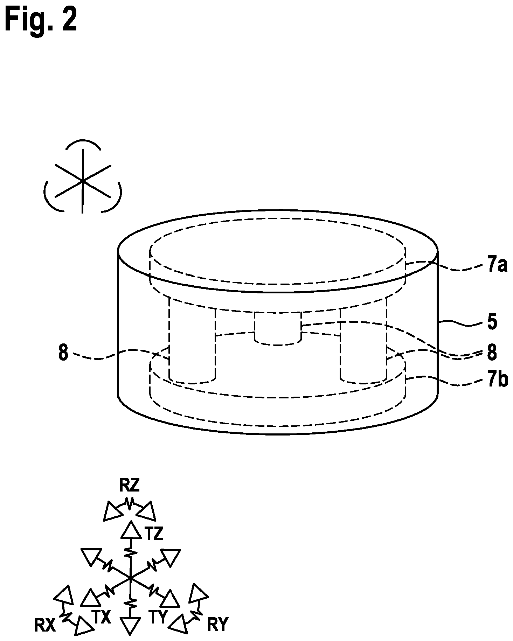

In der Figur 2 ist die Ausgleichsvorrichtung 5 nochmals stark schematisiert dargestellt, wobei zu erkennen ist, dass diese auf einer dem Manipulator 2 zugewandten Seite einen ersten Schnittstellenabschnitt 7a und auf einer dem Endeffektor 3 zugewandten Seite einen zweiten Schnittstellenabschnitt 7b aufweist. In dem gezeigten Ausführungsbeispiel sind die Schnittstellenabschnitte 7a, b jeweils als Flanschplatten ausgebildet. Bei einer konstruktiven Umsetzung können die Schnittstellenabschnitte 7a, b jedoch jeweils z.B. als Baugruppen ausgebildet sein.

Zwischen dem ersten Schnittstellenabschnitt 7a und dem zweiten Schnittstellenabschnitt 7b sind drei Gelenkeinrichtungen 8 vorgesehen, welche sich parallel zu der Z-Achse erstrecken. Die Gelenkeinrichtungen 8 erlauben es, den zweiten Schnittstellenabschnitt 7b als nachgiebigen Schnittstellenabschnitt relativ zu dem fixierten Schnittstellenabschnitt 7a gemäß der Bewegungsfreiheitsgrade TX, TY, TZ, RX, RY, RZ zu bewegen.

In der gezeigten Darstellung sind die Gelenkeinrichtungen 8 auf einem gemeinsamen Teilkreis um eine zentral verlaufende Achse, welche gleich oder parallel zu der Z-Achse ausgerichtet ist, verteilt.

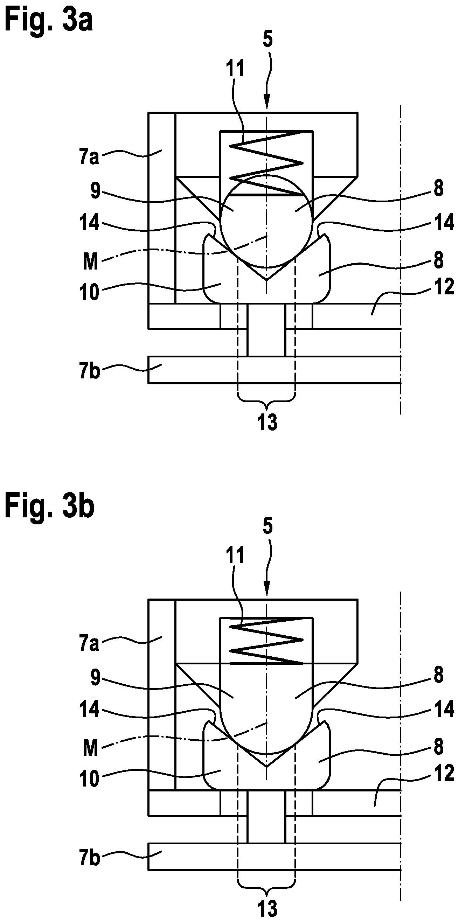

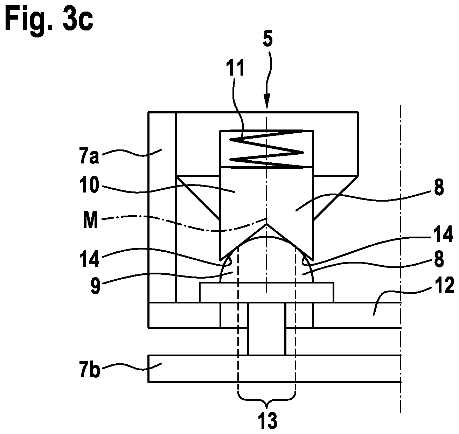

Die Figuren 3a, b, c zeigen jeweils ein mögliches Ausführungsbeispiel für die Umsetzung und die Integration der Gelenkeinrichtung 8 in der Ausgleichsvorrichtung 5.

In einer stark schematisierten Darstellung sind jeweils wieder der erste Schnittstellenabschnitt 7a und der zweite Schnittstellenabschnitt 7b zu erkennen. Die Gelenkeinrichtung 8 ist parallel zu der Z-Achse ausgerichtet und umfasst einen Kugelabschnitt 9, welcher einen ersten Gelenkpartner der Gelenkeinrichtung 8 sowie einen Aufnahmeabschnitt 10, welcher einen zweiten Gelenkpartner der Gelenkeinrichtung 8 bildet.

Der Kugelabschnitt 9 ist in dem Ausführungsbeispiel in der Figur 3a als eine Kugel ausgebildet. Der Aufnahmeabschnitt 10 ist als eine konusförmige, in diesem Beispiel kegelförmige Aufnahme oder konkav Aussparung ausgebildet, wobei sich der Aufnahmeabschnitt 10 um eine Mittelachse M vollständig umlaufend erstreckt, wobei die Mittelachse M parallel zu der Z-Achse ausgerichtet ist. Der Aufnahmeabschnitt 10 bildet mittig oder zentral eine insbesondere selbstzentrierende Aufnahme 13 für den Kugelabschnitt 9, welcher über eine durch die konusförmige, insbesondere kegelförmige Mantelfläche als ein Rampenbereich 14 in radialer Richtung weitergeführt ist.

Die Ausgleichsvorrichtung 5 weist eine Vorspanneinrichtung 11 auf, welche in dem Ausführungsbeispiel 3a als eine Federeinrichtung, insbesondere Spiralfedereinrichtung, ausgebildet ist und welche den Kugelabschnitt 9, insbesondere die Kugel, parallel zu der Z-Achse in Richtung des Aufnahmeabschnitts 10 vorspannt, sodass der Kugelabschnitt 9 vorgespannt auf dem Aufnahmeabschnitt 10 anliegt.

Der erste Schnittstellenabschnitt 7a weist einen Stützbereich 12 auf, auf dem in der gezeigten Normallage sich der als zweiter Gelenkpartner ausgebildete Aufnahmeabschnitt 10 entweder unmittelbar oder mittelbar abstützt. Der Aufnahmeabschnitt 10 als zweiter Gelenkpartner ist mit dem zweiten Schnittstellenabschnitt 7b starr verbunden.

Der zweite Schnittstellenabschnitt 7b ist relativ zu dem ersten Schnittstellenabschnitt 7a gemäß der Bewegungsfreiheitsgrade ausgehend von der Normallage in eine Ausgleichslage wie folgt bewegbar:
Bei einer Bewegung des zweiten Schnittstellenabschnitts 7b in Richtung der Z-Achse und/oder in Richtung des ersten Schnittstellenabschnitts 7a federt die Vorspanneinrichtung 11 ein, sodass ein Bewegungsfreiheitsgrad TY gegeben ist.

Bei einer Bewegung des zweiten Schnittstellenabschnitts 7b in Y-Richtung verschiebt sich der Aufnahmeabschnitt 10 und/oder der zweite Gelenkpartner auf dem Stützbereich 12, wobei der Kugelabschnitt 9 gegen die Vorspannkraft der Vorspanneinrichtung 11 in Richtung des ersten Schnittstellenabschnitts 7a gedrückt wird. Damit ist ein Bewegungsfreiheitsgrad TY möglich. Durch die konusförmige, insbesondere kegelförmige, Gestaltung des Aufnahmeabschnitts 10 wird der zweite Gelenkpartner und/oder der Aufnahmeabschnitt 10 und damit der damit starr verbundene zweite Schnittstellenabschnitt 7b aus der Ausgleichslage in die Normallage zurückgeführt.

In gleicher Weise kann sich der zweite Gelenkpartner und/oder der Aufnahmeabschnitt 10 und/oder der zweite Schnittstellenabschnitt 7b in der Richtung der X-Achse relativ zu dem ersten Schnittstellenabschnitt 7a bewegen.

Somit bildet die Gelenkeinrichtung 8 ein Verschiebegelenk für die Bewegungsfreiheitsgrade TX, TY und TZ.

Zudem ist die Gelenkeinrichtung 8 als ein Kugelgelenk ausgebildet, sodass sich der zweite Gelenkpartner und/oder der Aufnahmeabschnitt 10 relativ zu dem ersten Gelenkpartner und/oder zu dem Kugelabschnitt 9 in Bezug auf die Bewegungsfreiheitsgrade RX, RY, RZ verschwenken lässt. Damit kann der zweite Schnittstellenabschnitt 7b relativ zu dem ersten Schnittstellenabschnitt 7a in Bezug auf die Bewegungsfreiheitsgrade RX, RY und RZ ausgelenkt werden.

Die genannten Bewegungsfreiheitsgrade sind auch umsetzbar, wenn die Ausgleichsvorrichtung 5 nicht nur wie in den Figuren 3a - c dargestellt nur eine einzige Gelenkeinrichtung 8, sondern wie zum Beispiel wie in der Figur 2 dargestellt genau oder mindestens drei Gelenkeinrichtungen 8 aufweist. Zudem wird eine federnde Rückstellung in Bezug auf den Bewegungsfreiheitsgrad RZ erreicht.

Um die Ausgleichsbewegungen in die Ausgleichsvorrichtung 5 einzuleiten, kann beispielsweise vorgesehen sein, dass der Endeffektor 3 das Werkstück 4 beim Greifen knapp verfehlt und sich durch die Ausgleichsbewegungen selbsttätig in eine Position bringt, um das Werkstück 4 korrekt zu greifen.

Der Vorteil des Ausführungsbeispiels in der Figur 3a ist, dass der als Kugel ausgebildete Kugelabschnitt 9 über den Aufnahmeabschnitt 10 abrollen kann. Der Aufnahmeabschnitt 10 bildet damit den Rampenbereich 14 für den Kugelabschnitt 9 aus, wobei bei dem Übergang des Kugelabschnitts 9 von der Normallage in eine Ausgleichslage mittels Nutzung des Verschiebegelenks der Kugelabschnitt 9 auf dem Rampenbereich 14 abläuft und in diesem Ausführungsbeispiel abrollt.

Das Ausführungsbeispiel der Gelenkeinrichtung in der Figur 3b weist dagegen einen Kugelabschnitt 9 auf, welcher als ein abgerundeter Bolzen ausgebildet ist, welcher in einer identisch zu dem Ausführungsbeispiel in der Figur 3a ausgebildeten Aufnahmeabschnitt 10 liegt. Der Vorteil der Ausgestaltung in der Figur 3b ist, dass der Kugelabschnitt 9 in Richtung der Z-Achse besser führbar ist. Dagegen kann der Kugelabschnitt 9 relativ zu dem Aufnahmeabschnitt 10 bei der Nutzung des Rampenbereichs 14 nur verschoben werden und/oder gleiten, sodass gegebenenfalls eine höhere Reibung im Vergleich zu dem Ausführungsbeispiel in der Figur 3a entsteht.

In der Figur 3c ist eine Ausführung mit einer kinematischen Umkehr des ersten und des zweiten Gelenkpartners im Vergleich zu dem Ausführungsbeispiel in der Figur 3b zu sehen, wobei in der Figur 3c der Aufnahmeabschnitt 10 über die Vorspanneinrichtung 11 in dem ersten Schnittstellenabschnitt 7a in Richtung der Z-Achse vorgespannt und verschiebbar gelagert ist und dagegen der Kugelabschnitt 9 als zweiter Gelenkpartner auf dem zweiten Schnittstellenabschnitt 7b fest angeordnet ist. Die Funktionsweise ist jedoch gleich zu den vorhergehenden Ausführungsbeispielen.

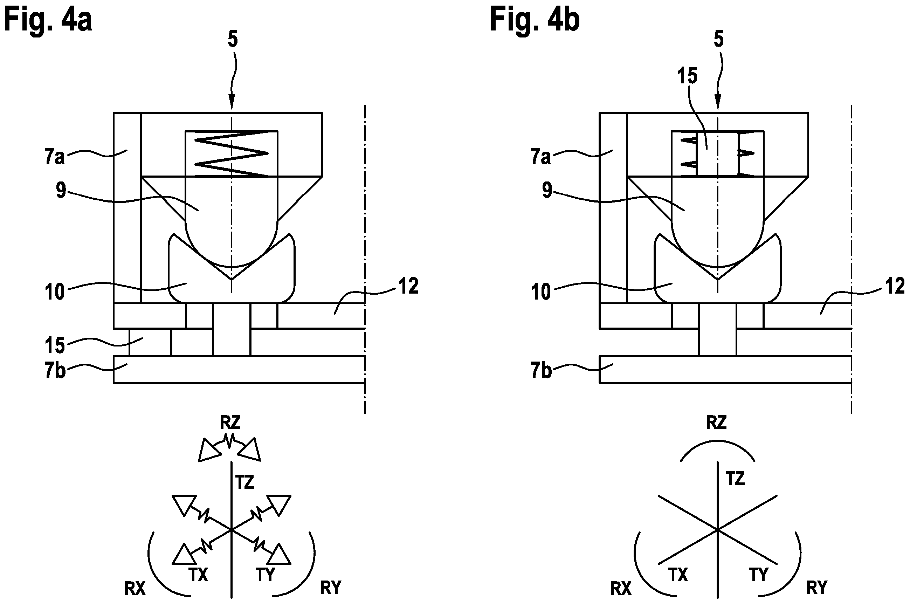

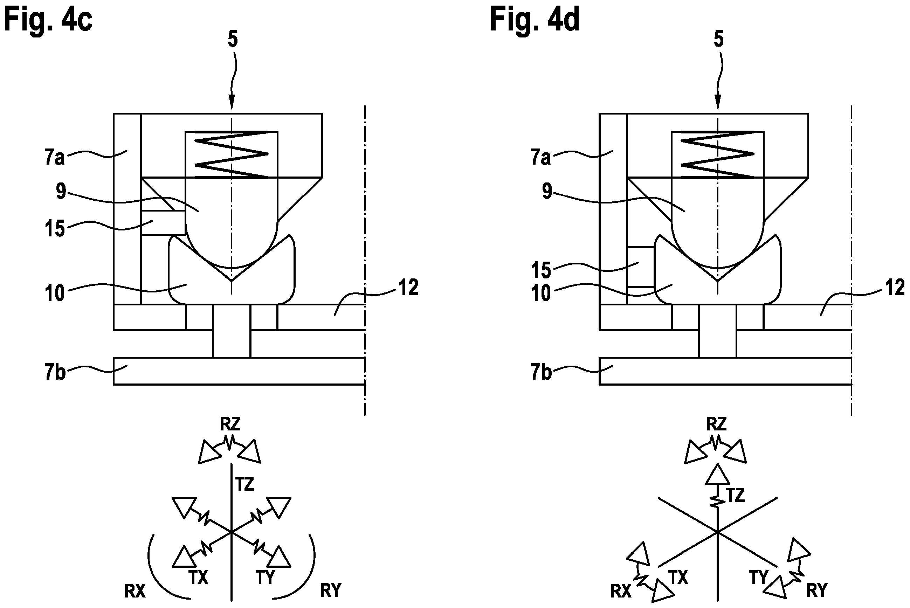

Die Figuren 4a - f zeigen verschiedene Varianten, wie die Bewegungsfreiheitsgrade TX, TY, TZ, RX, RY, RZ selektiv eingeschränkt werden können, wobei Figur 4b eine erfindungsgemäße Ausgestaltung betrifft und die Figuren 4a, c-f nicht zur Erfindung gehörende Ausführungen beschreiben. Die Ausgleichsvorrichtung 5 weist hierzu jeweils eine Riegeleinrichtung 15 auf, welche bestimmte Bewegungsfreiheitsgrade und damit Relativbewegungen zwischen dem zweiten Schnittstellenabschnitt 7b und dem ersten Schnittstellenabschnitt 7a sperrt. Die Riegeleinrichtungen 15 weisen Riegel auf, welche wahlweise stationär oder aktivierbar und deaktivierbar in der Ausgleichsvorrichtung 5 angeordnet sein können. Die Riegeleinrichtungen 15 sind in den Figuren nur symbolisch dargestellt und visualisieren den Wirkungspunkt des Riegels.

In der Figur 4a ist beispielsweise eine Riegeleinrichtung 15 zwischen dem zweiten Schnittstellenabschnitt 7b und dem ersten Schnittstellenabschnitt 7a und insbesondere dem Stützbereich 12 angeordnet. Durch die Riegeleinrichtung 15 ist der Bewegungsfreiheitsgrad TZ sowie die Bewegungsfreiheitsgrade RX und RY gesperrt.

In der Figur 4b ist eine andere Riegeleinrichtung 15 in Richtung der Z-Achse zwischen dem Kugelabschnitt 9 und dem ersten Schnittstellenabschnitt 7a, b angeordnet, sodass die Vorspanneinrichtung 11 blockiert ist. Diese Riegeleinrichtung 14 führt zu einer Blockierung aller Bewegungsfreiheitsgrade TX, TY, TZ, RX, RY, RZ.

In der Figur 4c ist eine Riegeleinrichtung 15 zwischen dem Aufnahmeabschnitt 10 und dem ersten Schnittstellenabschnitt 7a - in Z-Achsen-Richtung wirkend - sowie zwischen dem Kugelabschnitt 9 und einer Seitenwand des ersten Schnittstellenabschnitts 7a in Y-Richtung wirkend angeordnet. Durch diese Riegeleinrichtung 15 wird der Bewegungsfreiheitsgrad TZ sowie RX und RY gesperrt.

In der Figur 4d ist eine Riegeleinrichtung 15 zwischen dem Aufnahmeabschnitt 10 und einer Seitenwand des ersten Schnittstellenabschnitts 7a in Richtung der Y-Achse wirkende Riegeleinrichtung 15 vorgesehen, sodass die Bewegungsfreiheitsgrade TX und TY gesperrt sind.

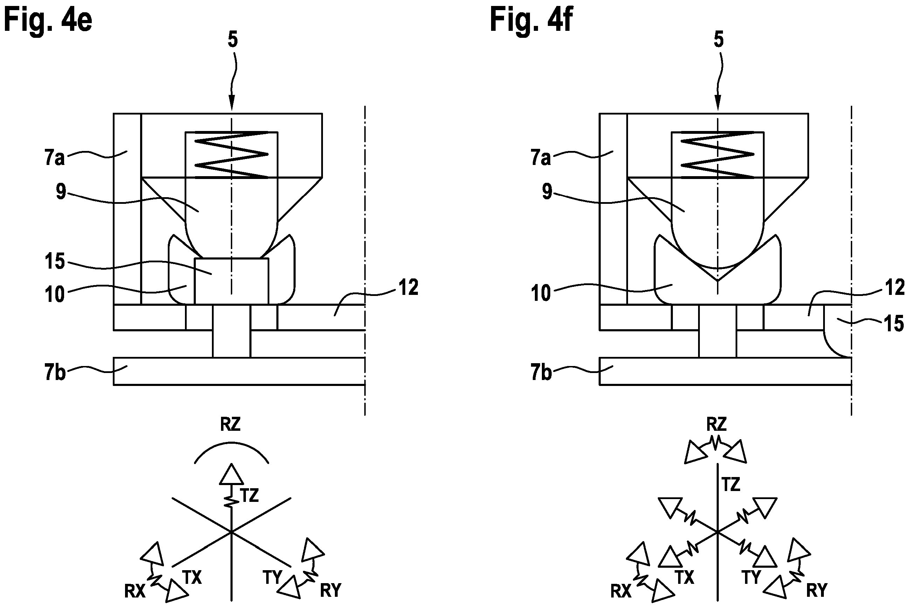

In der Figur 4e ist eine Riegeleinrichtung 15 zwischen dem Aufnahmeabschnitt 10 und dem Stützbereich 12 in Richtung der X-Achse wirkend angeordnet, so dass die Bewegungsfreiheitsgrade TX und TY gesperrt sind.

In der Figur 4f ist eine Riegeleinrichtung 15 in ähnlicher Position wie die Riegeleinrichtung 15 in der Figur 4a angeordnet, wobei diese jedoch mit einer sphärischen Spitze auf dem zweiten Schnittstellenabschnitt 7b aufliegt, sodass nur der Bewegungsfreiheitsgrad TZ blockiert ist.

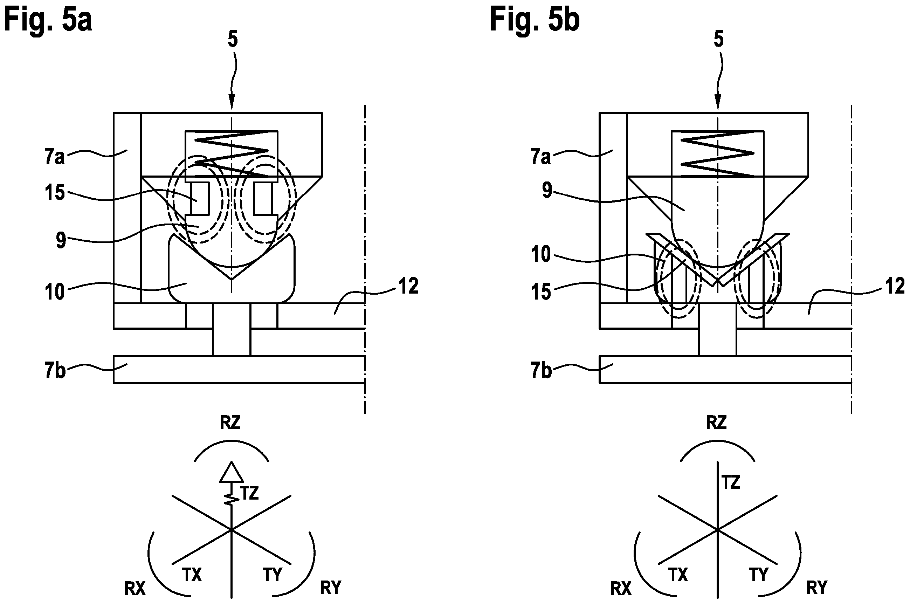

Während in den vorhergehenden Figuren 4a - f mechanische Riegeleinrichtungen 15 gezeigt wurden, ist in den Figuren 5a, 5b jeweils eine magnetische Riegeleinrichtung 15 dargestellt. In der Figur 5a ist eine Spule in dem Kugelabschnitt 9a integriert, welche bei einem Betrieb als Magnet den Kugelabschnitt 9 mit dem Aufnahmeabschnitt 10 festzieht, sodass die Bewegungsfreiheitsgrade TX, TY, RX, RY und RZ fixiert sind. In der Figur 5b ist dagegen eine magnetische Riegeleinrichtung in dem Aufnahmeabschnitt 10 angeordnet, so dass bei einer Aktivierung alle Bewegungsfreiheitsgrade gesperrt sind. Insbesondere wird zum einen der Aufnahmeabschnitt 10 mit dem Kugelabschnitt 9 magnetisch geschlossen und zudem der Aufnahmeabschnitt 10 mit dem Stützbereich 12 als Teil einer Platte magnetisch geschlossen ist.

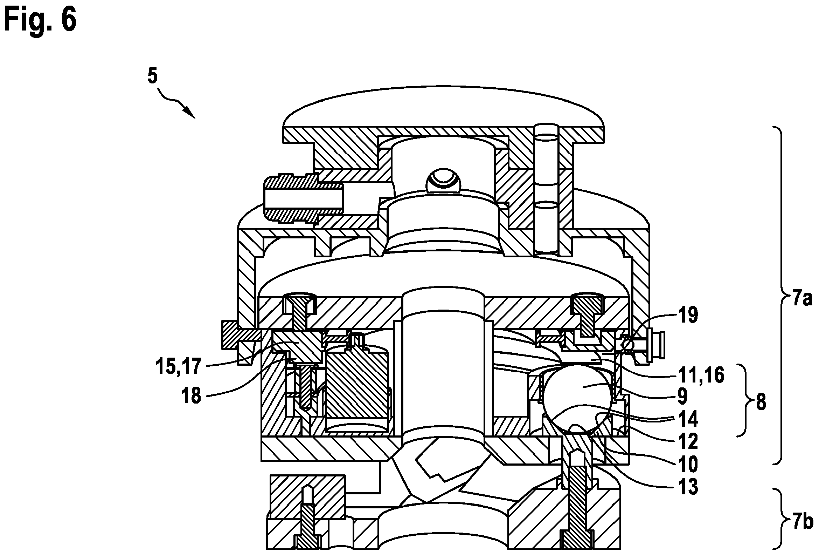

In der Figur 6 ist eine schematische Schnittansicht einer konstruktiven Ausgestaltung der Ausgleichsvorrichtung 5 als ein weiteres Ausführungsbeispiel der Erfindung dargestellt. Die Ausgleichsvorrichtung 5 weist wieder einen ersten Schnittstellenabschnitt 7a und einen zweiten Schnittstellenabschnitt 7b auf, welche jeweils als eine Baugruppe ausgebildet sind. In Richtung der Z-Achse erstreckend sind drei Gelenkeinrichtungen 8 angeordnet, welche auf einem gemeinsamen Durchmesser eines gemeinsamen Teilkreises in Umlaufrichtung in regelmäßigen Abständen zueinander angeordnet sind. Insbesondere sind diese jeweils um 120 Grad zueinander versetzt. In dem ersten Schnittstellenabschnitt 7a befindet sich ein als Kugel ausgebildeter Kugelabschnitt 9, welcher in Richtung der Z-Achse verschiebbar angeordnet ist. Die Funktion der Vorspanneinrichtung 11 wird durch eine umlaufende Blattfeder 16 eingenommen, welche koaxial zu dem Teilkreis angeordnet ist und sich in einer Radialebene zu der Z-Achse erstreckt. Durch eine Verschiebung des als Kugel ausgebildeten Kugelabschnitts 9 in Richtung der Z-Achse (in der Figur 6 nach oben) wird die durch die Vorspanneinrichtung 11 erzeugte Vorspannkraft vergrößert. Der Kugelabschnitt 9 bildet wieder den ersten Gelenkpartner.

Der zweite Gelenkpartner, welcher wieder als ein Aufnahmeabschnitt 10 ausgebildet ist, ist mit dem zweiten Schnittstellenabschnitt 7b fest verbunden und liegt mit seiner Unterseite auf dem Stützbereich 12 auf. Der zweite Gelenkpartner durchgreift den Stützbereich 12, wobei eine Durchgangsöffnung in Richtung der X-Achse und Y-Achse so groß ausgebildet ist, dass eine Relativverschiebung in TX- und TY-Richtung möglich ist.

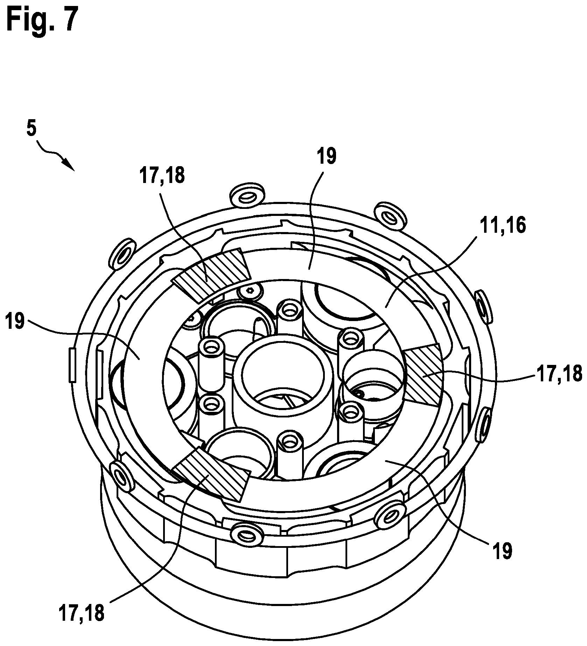

In der Figur 7 ist die Ausgleichsvorrichtung 5 in der Figur 6 in einem schematischen Querschnitt in einer Radialebene senkrecht zu der Z-Achse dargestellt, wobei im Bereich der Vorspanneinrichtung 11 beziehungsweise der Blattfeder 16 die Schnittebene verläuft. Grafisch noch angedeutet und im Zusammenhang mit der Figur 6 zu verstehen ist ein Riegelring 17 gezeigt, welcher Riegelabschnitte 18 aufweist, welche als Verdickungen in Richtung der Z-Achse ausgebildet sind. Zwischen den Riegelabschnitten 18 sind Freiabschnitte 19 dargestellt. In der Figur 6 ist auf der rechten Seite ein Riegelabschnitt 18 und - im Vergleich dazu in Richtung der Z-Achse wesentlich schmaler ausgeführt - ein Freiabschnitt 19 dargestellt. In der Figur 7 sind die Freiabschnitte 19 nur als Bezugszeichen eingetragen.

In dem in der Figur 7 gezeigten Freigabezustand der Riegeleinrichtung 15 liegen die Freiabschnitte 19 deckungsgleich zu den Kugelabschnitten 9, sodass diese in Richtung der Z-Achse verschoben werden können. Wird der Riegelring 17 in Umlaufrichtung weiter bewegt, sodass die Riegelabschnitte 18 deckungsgleich in Richtung der Z-Achse zu den Kugelabschnitten 9 angeordnet sind, so sind die Vorspanneinrichtung 11 und/oder die Kugelabschnitte 9 in Bezug auf eine Bewegung in Richtung der Z-Achse gesperrt. Anders ausgedrückt sind die Kugelabschnitte 9 in Richtung der Z-Achse verriegelt, wie dies schematisiert in der Figur 4b gezeigt ist. Der guten Ordnung halber soll noch darauf hingewiesen werden, dass in der Figur 4b die Riegeleinrichtung 15 parallel zu der Vorspanneinrichtung 11 angeordnet ist und in der Figur 6 die Vorspanneinrichtung 11 ausgebildet als Blattfeder 16 unmittelbar auf dem Kugelabschnitt 9 aufliegt und der Riegelring 17 seriell und/oder sequenziell dazu angeordnet ist.

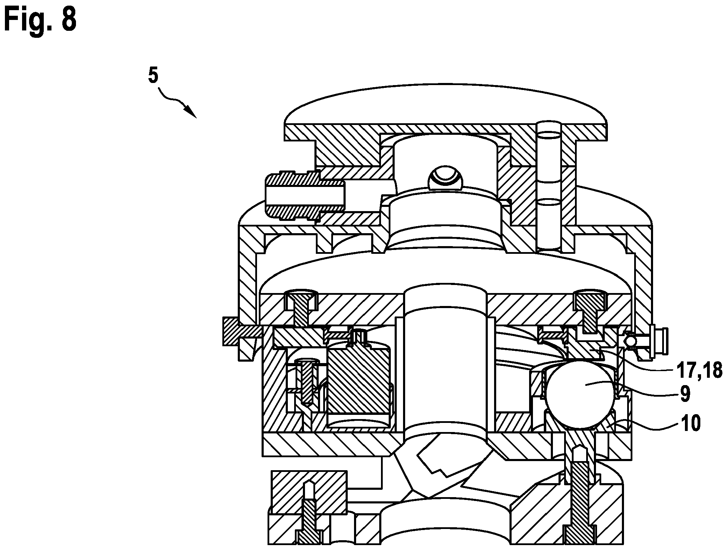

In der Figur 8 ist in gleicher Darstellung wie in der Figur 6 die Ausgleichsvorrichtung 5 gezeigt, wobei im Vergleich hierzu der Riegelring 17 in der verriegelten Position liegt. Damit kann der Kugelabschnitt 9 nicht in Richtung der Z-Achse (nach oben) ausgelenkt werden, sodass sämtliche Bewegungsfreiheitsgrade der Ausgleichsvorrichtung 5 gesperrt sind.

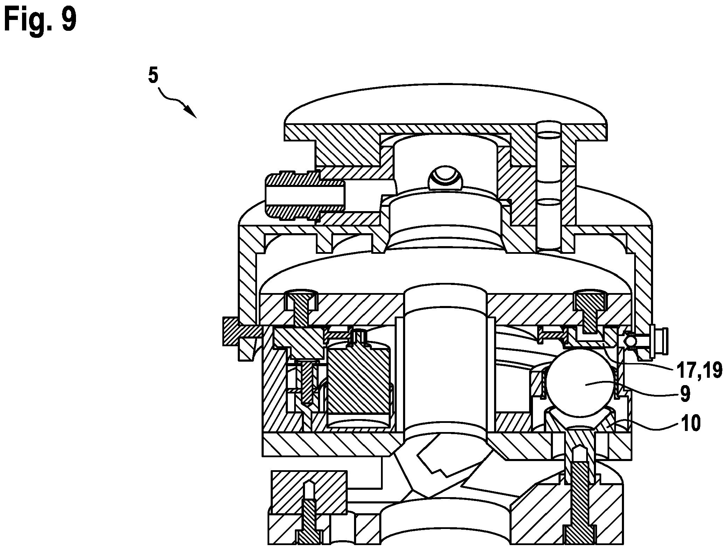

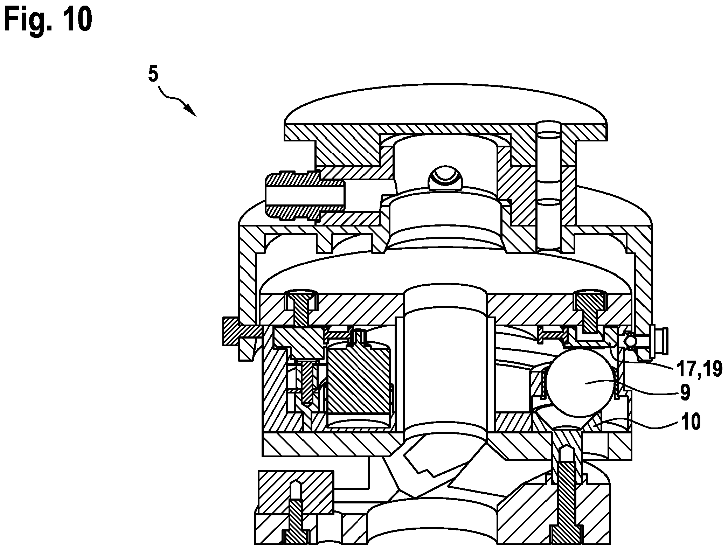

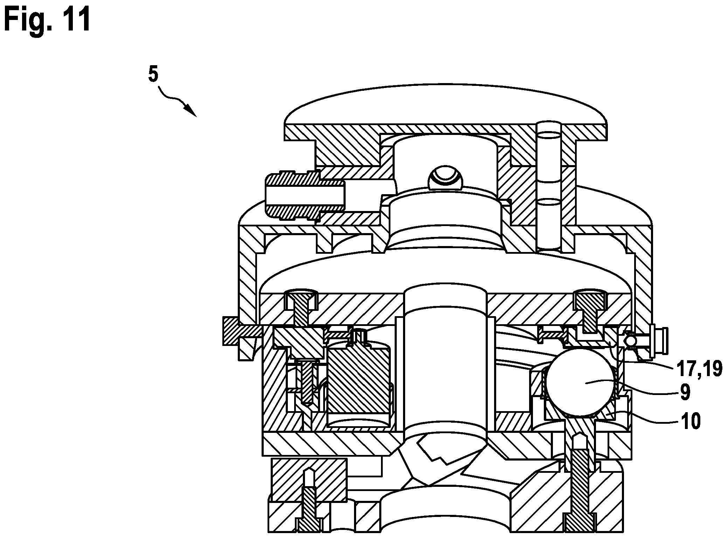

Die Figur 9 zeigt den Riegelring 17 wieder in einer Freigabeposition, wobei der zweite Schnittstellenabschnitt 7b gegenüber dem ersten Schnittstellenabschnitt 7a in TX-Richtung verschoben ist. Durch das Verschieben ist der Kugelabschnitt 9 in Richtung der X-Achse auf den Rampenbereich 14 des Aufnahmeabschnitts 10 hinauf gelaufen, wodurch der Kugelabschnitt 9 in Richtung der Z-Achse verschoben wurde. Durch das Hinauflaufen des Kugelabschnitts 9 wird zum einen die Verschiebebewegung in TX-Richtung umgesetzt. Zum anderen wird die Blattfeder 16 und/oder die Vorspanneinrichtung 11 derart verformt, dass die Vorspannkraft erhöht wird und die Ausgleichsvorrichtung 5 somit derart vorgespannt ist, dass diese wieder versucht, in die Normallage gemäß der vorhergehenden Figur zurückzukehren. In der Figur 10 ist eine Relativverschiebung in TY-Richtung gezeigt, wobei das Hinauflaufen des Kugelabschnitts 9 entlang des Rampenbereichs 14 nochmals deutlich zu erkennen ist. In der Figur 11 ist dagegen eine Verschiebung in Richtung der Z-Achse zu erkennen.

Die Verschiebungen in RX-, RY- und RZ-Richtung können durch ein relatives Verschwenken des zweiten Schnittstellenabschnitts 7b relativ zu dem ersten Schnittstellenabschnitt 7a umgesetzt werden.

## Patentansprüche

1. Ausgleichsvorrichtung (5) für eine Handhabungseinrichtung (1),
wobei die Ausgleichsvorrichtung (5) einen ersten Schnittstellenabschnitt (7a) für einen Manipulator (2) und einen zweiten Schnittstellenabschnitt (7b) für einen Endeffektor (3) aufweist, so dass die Ausgleichsvorrichtung (5) zwischen dem Manipulator (2) und dem Endeffektor (3) anordenbar ist,
mit mindestens einer Gelenkeinrichtung (8), wobei die mindestens eine Gelenkeinrichtung (8) gleichgerichtet zu einer ersten Achse (Z) zwischen den Schnittstellenabschnitten (7a,b) ausgerichtet ist und einen ersten und einen zweiten Gelenkpartner (9,10) aufweist, wobei der erste Gelenkpartner (9) mit dem ersten Schnittstellenabschnitt (7a) und der zweite Gelenkpartner (10) mit dem zweiten Schnittstellenabschnitt (7b) verbunden ist,
wobei der eine Gelenkpartner einen Kugelabschnitt (9) und der andere Gelenkpartner einen Aufnahmeabschnitt (10) für den Kugelabschnitt (9) aufweist, so dass die Gelenkeinrichtung (8) ein Schwenkgelenk oder ein Kugelgelenk bildet,
wobei der Aufnahmeabschnitt (10) mindestens einen Rampenbereich (14) umfasst, wobei der Kugelabschnitt (9) von einer Normallage in einer Querrichtung (X-Y) zu der ersten Achse (Z) in eine Ausgleichslage verschiebbar ist, so dass die Gelenkeinrichtung (8) ein Verschiebegelenk bildet,
mit einer Vorspanneinrichtung (11) zur Vorspannung der Gelenkeinrichtung (8), so dass der Kugelabschnitt (9) von der Ausgleichslage in die Normallage zurückgeführt wird,
**gekennzeichnet durch**
mindestens eine Riegeleinrichtung (15) zur Verriegelung sämtlicher Bewegungsfreiheitsgrade (TX, TY, TZ, RX, RY, RZ) zwischen dem ersten und dem zweiten Schnittstellenabschnitt (7a,b),
wobei die Riegeleinrichtung (15) die Vorspanneinrichtung (11) verriegelt..

2. Ausgleichsvorrichtung (5) nach Anspruch 1, **dadurch gekennzeichnet, dass** der Rampenbereich (14) als ein um eine Mittelachse (M) vollständig oder zumindest teilweise umlaufender Konusabschnitt, insbesondere Kegelabschnitt ausgebildet ist, wobei die Mittelachse (M) gleich, gleichgerichtet oder parallel zu der erste Achse (Z) ausgebildet ist.

3. Ausgleichsvorrichtung (5) nach einem der vorherigen Ansprüche, **dadurch gekennzeichnet, dass** die Vorspanneinrichtung (11) die Gelenkpartner in der Richtung der ersten Achse (Z) zueinander unter Vorspannung setzt, wobei der Rampenabschnitt (14) derart geformt ist, dass der Übergang des Kugelabschnitts (9) von der Normallage in die Ausgleichslage gegen die Vorspannung erfolgt.

4. Ausgleichsvorrichtung (5) nach einem der vorhergehenden Ansprüche, **gekennzeichnet durch** mindestens drei der Gelenkeinrichtungen (8), wobei die mindestens drei Gelenkeinrichtungen (8) auf einem gemeinsamen Teilkreis angeordnet sind.

5. Ausgleichsvorrichtung (5) nach einem der vorhergehenden Ansprüche, **dadurch gekennzeichnet, dass** der erste Gelenkpartner (9) mit dem ersten Schnittstellenabschnitt (7a) über die Vorspannungseinrichtung (11) in Richtung des zweiten Gelenkpartners (10) verschiebbar vorgespannt ist und der zweite Gelenkpartner (10) fest mit dem zweiten Schnittstellenabschnitt (7b) verbunden ist und wobei sich der zweite Gelenkpartner (7b) in der Normallage an einem Stützbereich (12) des ersten Schnittstellenabschnitts (7a) abstützt.

6. Ausgleichsvorrichtung (5) nach einem der Ansprüche 4 oder 5, **dadurch gekennzeichnet, dass** die Riegeleinrichtung (15) einen Riegelring (17) mit Riegelabschnitten (18) und Freiabschnitten (19) aufweist, wobei der Riegelring (17) in eine Verriegelungsposition und eine Freigabeposition bringbar ist, wobei in der Verriegelungsposition die Riegelabschnitte (18) die Gelenkeinrichtungen (8) und/oder die Vorspanneinrichtung (11) verriegeln und in der Freigabeposition die Freiabschnitte (19) die Gelenkeinrichtungen (8) bzw. die Vorspanneinrichtung (11) freigeben.

7. Ausgleichsvorrichtung (5) nach Anspruch 6, **dadurch gekennzeichnet, dass** die Riegeleinrichtung (15) einen Motor zur Schwenkung des Riegelrings (17) aufweist.

8. Handhabungseinrichtung (1) mit einer Ausgleichsvorrichtung (5) nach einem der vorhergehenden Ansprüche.

## Claims

1. Compensating apparatus (5) for a handling device (1),
the compensating apparatus (5) having a first interface portion (7a) for a manipulator (2) and a second interface portion (7b) for an end effector (3), with the result that the compensating apparatus (5) can be arranged between the manipulator (2) and the end effector (3),
with at least one joint device (8), the at least one joint device (8) being oriented between the interface portions (7a,b) in an identically directed manner with respect to a first axis (Z) and having a first and a second joint partner (9, 10), the first joint partner (9) being connected to the first interface portion (7a), and the second joint partner (10) being connected to the second interface portion (7b),
the one joint partner having a ball portion (9) and the other joint partner having a receiving portion (10) for the ball portion (9), with the result that the joint device (8) forms a pivoting joint or a ball joint,
the receiving portion (10) comprising at least one ramp region (14), it being possible for the ball portion (9) to be displaced from a normal position in a transverse direction (X-Y) with respect to the first axis (Z) into a compensating position, with the result that the joint device (8) forms a plunge joint,
with a prestressing device (11) for prestressing the joint device (8), with the result that the ball portion (9) is returned from the compensating position into the normal position,
**characterized by**
at least one latch device (15) for locking all the degrees of motion freedom (TX, TY, TZ, RX, RY, RZ) between the first and the second interface portion (7a,b),
the latch device (15) locking the prestressing device (11) .

2. Compensating apparatus (5) according to Claim 1, **characterized in that** the ramp region (14) is configured as a cone portion, in particular a conical portion, which runs completely or at least partially around the centre axis (M), the centre axis (M) being configured to be identical, identically directed or parallel to the first axis (Z).

3. Compensating apparatus (5) according to either of the preceding claims, **characterized in that** the prestressing device (11) sets the joint partners under prestress with respect to one another in the direction of the first axis (Z), the ramp portion (14) being shaped in such a way that the transition of the ball portion (9) from the normal position into the compensating position takes place counter to the prestress.

4. Compensating apparatus (5) according to one of the preceding claims, **characterized by** at least three of the joint devices (8), the at least three joint devices (8) being arranged on a common reference circle.

5. Compensating apparatus (5) according to one of the preceding claims, **characterized in that** the first joint partner (9) with the first interface portion (7a) is prestressed by the prestressing device (11) such that they can be displaced in the direction of the second joint partner (10), and the second joint partner (10) is connected fixedly to the second interface portion (7b), and the second joint partner (7b) being supported in the normal position on a supporting region (12) of the first interface portion (7a).

6. Compensating apparatus (5) according to either of Claims 4 or 5, **characterized in that** the latch device (15) has a latch ring (17) with latch portions (18) and free portions (19), it being possible for the latch ring (17) to be moved into a locking position and a release position, the latch portions (18) locking the joint devices (8) and/or the prestressing device (11) in the locking position, and the free portions (19) releasing the joint devices (8) and/or the prestressing device (11) in the release position.

7. Compensating apparatus (5) according to Claim 6, **characterized in that** the latch device (15) has a motor for pivoting the latch ring (17).

8. Handling device (1) with a compensating apparatus (5) according to one of the preceding claims.

## Revendications

1. Dispositif de compensation (5) pour un appareil de manipulation (1), le dispositif de compensation (5) présentant une première section d'interface (7a) pour un manipulateur (2) et une deuxième section d'interface (7b) pour un effecteur terminal (3), de telle sorte que le dispositif de compensation (5) peut être agencé entre le manipulateur (2) et l'effecteur terminal (3), comprenant au moins un appareil d'articulation (8), l'au moins un appareil d'articulation (8) étant orienté dans le même sens qu'un premier axe (Z) entre les sections d'interface (7a, b) et présentant un premier et un deuxième partenaire d'articulation (9, 10), le premier partenaire d'articulation (9) étant relié à la première section d'interface (7a) et le deuxième partenaire d'articulation (10) à la deuxième section d'interface (7b),
l'un des partenaires d'articulation présentant une section sphérique (9) et l'autre partenaire d'articulation présentant une section de réception (10) pour la section sphérique (9), de telle sorte que l'appareil d'articulation (8) forme une articulation pivotante ou une articulation sphérique,
la section de réception (10) comprenant au moins une zone de rampe (14), la section sphérique (9) pouvant être déplacée d'une position normale dans une direction transversale (X-Y) par rapport au premier axe (Z) à une position de compensation, de telle sorte que l'appareil d'articulation (8) forme une articulation coulissante, comprenant un appareil de précontrainte (11) pour précontraindre l'appareil d'articulation (8), de telle sorte que la section sphérique (9) est ramenée de la position de compensation à la position normale, **caractérisé par**
au moins un appareil de verrouillage (15) pour verrouiller tous les degrés de liberté de mouvement (TX, TY, TZ, RX, RY, RZ) entre la première et la deuxième section d'interface (7a, b),
l'appareil de verrouillage (15) verrouillant l'appareil de précontrainte (11).

2. Dispositif de compensation (5) selon la revendication 1, **caractérisé en ce que** la zone de rampe (14) est réalisée sous la forme d'une section en cône, notamment d'une section conique, entourant entièrement ou au moins partiellement un axe central (M), l'axe central (M) étant configuré pour être identique, dans le même sens ou parallèle au premier axe (Z).

3. Dispositif de compensation (5) selon l'une quelconque des revendications précédentes, **caractérisé en ce que** l'appareil de précontrainte (11) met les partenaires d'articulation sous précontrainte l'un par rapport à l'autre dans la direction du premier axe (Z), la section de rampe (14) ayant une forme telle que le passage de la section sphérique (9) de la position normale à la position de compensation s'effectue à l'encontre de la précontrainte.

4. Dispositif de compensation (5) selon l'une quelconque des revendications précédentes, **caractérisé par** au moins trois des appareils d'articulation (8), les au moins trois appareils d'articulation (8) étant agencés sur un cercle partiel commun.

5. Dispositif de compensation (5) selon l'une quelconque des revendications précédentes, **caractérisé en ce que** le premier partenaire d'articulation (9) est précontraint avec la première section d'interface (7a) par l'intermédiaire de l'appareil de précontrainte (11) de manière à pouvoir se déplacer en direction du deuxième partenaire d'articulation (10) et le deuxième partenaire d'articulation (10) est relié de manière fixe à la deuxième section d'interface (7b) et le deuxième partenaire d'articulation (7b) s'appuie dans la position normale sur une zone d'appui (12) de la première section d'interface (7a).

6. Dispositif de compensation (5) selon l'une quelconque des revendications 4 ou 5, **caractérisé en ce que** l'appareil de verrouillage (15) présente une bague de verrouillage (17) comprenant des sections de verrouillage (18) et des sections de libération (19), la bague de verrouillage (17) pouvant être amenée dans une position de verrouillage et une position de libération, les sections de verrouillage (18) verrouillant dans la position de verrouillage les appareils d'articulation (8) et/ou l'appareil de précontrainte (11) et les sections de libération (19) libérant dans la position de libération les appareils d'articulation (8) ou l'appareil de précontrainte (11).

7. Dispositif de compensation (5) selon la revendication 6, **caractérisé en ce que** l'appareil de verrouillage (15) présente un moteur pour le pivotement de la bague de verrouillage (17).

8. Appareil de manipulation (1) comprenant un dispositif de compensation (5) selon l'une quelconque des revendications précédentes.
